# EUROPÄISCHE PATENTANMELDUNG

(11) **EP 2 784 898 A2**
(43) Veröffentlichungstag der Anmeldung: **01.10.2014**
(21) Anmeldenummer: 14158562.0
(22) Anmeldetag: 10.03.2014
(51) Int. Cl.: H02J 3/38

(54) **Verfahren und System zur Überwachung eines Niederspannungsnetzes bei Nutzung von Photovoltaik**

(30) Priorität: 26.03.2013 DE 102013205350
(71) Anmelder: Siemens AG Österreich, 1210 Wien (AT)
(72) Erfinder: Ilo, Albana, 3021 Pressbaum (AT); Reischböck, Markus, 91056 Erlangen (DE)
(74) Vertreter: Maier, Daniel Oliver

(57) **Zusammenfassung**

Die Erfindung betrifft eine Verfahren zur Überwachung eines Niederspannungsnetzes bei Nutzung von Photovoltaik (PV) sowie eine System zur Durchführung dieses Verfahrens. Vom Niederspannungsnetz werden dabei mehrere Regionen abgedeckt und es weist mehrere Stromführungszweige (S1, S2) auf, an welche Teilnehmer (T11, ..., T25) angeschlossen sind. Von diesen Teilnehmern (T11, ..., T25) wird Energie aus dem Netz bezogen bzw. von zumindest einem Teil mittels Photovoltaik (PV) erzeugte Energie in das Netz eingespeist. Für jede Region wird dabei zumindest ein Messgerät (MG11, MG21) bei einem einspeisenden Teilnehmer (T11, ..., T25) ausgewählt, von welchem Kennwerte gemessen und an ein zentrales Überwachungssystem (ZU) gesendet werden. Für jeden Stromzweig (S1, S2) sind zumindest drei Messstellen (M11, ..., M23) vorgesehen, von welchem ebenfalls Kennwerte im Stromzweig (S1, S2) ermittelt und an das zentrale Überwachungssystem (ZU) gesendet werden. Im zentralen Überwachungssystem (ZU) werden dann auf Basis der vom zumindest einen Messgerät (MG11, MG23) je Region gemessen Kennwerte Energieerzeugungswerte für die weiteren Teilnehmer (T11, ..., T25) der jeweiligen Region ermittelt und dann auf Basis dieser Energiewerte unter Verwendung von den in den Stromzweigen (S1, S2) der jeweiligen Region gemessenen Kennwerten sowie von statischen elektrischen Parametern (PA) Netzzustände für das Niederspannungsnetz abgeschätzt. Diese abgeschätzten Netzzustände können dann idealer Weise von weiteren Anwendungen (AW) zur Überwachung und Kontrolle eines Niederspannungsnetzes weiterverwertet werden.

## Beschreibung

### Technisches Gebiet

Die Erfindung betrifft allgemein das Gebiet der Energieversorgungsnetze, insbesondere den Bereich der Niederspannungsnetze. Im Speziellen bezieht sich die vorliegende Erfindung auf ein Verfahren und ein System zur Überwachung eines Niederspannungsnetzes, in welche von Teilnehmer Energie entnommen und von zumindest einem Teil der Teilnehmer mittels Photovoltaik Energie erzeugt und eingespeist wird. Vom Niederspannungsnetz werden mehrere Regionen abgedeckt und das Niederspannungsnetz ist in mehrere Stromführungszweige unterteilt.

### Stand der Technik

Ein Energieversorgungsnetz ist üblicherweise ein Netzwerk von elektrischen Leitungen, in welchem physikalische Vorgänge durch die so genannten Kirchhoff'schen Regeln beschrieben werden. Über ein Energieversorgungsnetz wird üblicherweise Strom oder Energie von konventionellen Energieerzeugern wie z.B. Kraftwerksbetreibern zu den Verbrauchern bzw. Teilnehmern (z.B. Industrieunternehmen, Haushalten, etc.) transportiert und verteilt. Für diesen Transport und die Verteilung der Energie sind in einem Energieversorgungsnetz drei Versorgungsebenen vorgesehen, welche im Prinzip Netze oder Netzebenen mit verschiedenen, festgelegten Spannungsbereichen darstellen. Diese verschiedenen Versorgungsebenen eines Energieversorgungsnetzes werden daher nach dem Spannungsbereich, bei welchem elektrische Energie übertragen wird, in eine Hochspannungs- oder Übertragungsebene, eine Mittelspannungs- oder Verteilungsebene und in eine Niederspannungs- oder Feinverteilungsebene unterteilt.

Die Niederspannungsebene bzw. Niederspannungsnetze bilden dabei eine unterste Ebene in einem Energieversorgungsnetz. In einem Niederspannungsnetz erfolgt üblicherweise die Feinverteilung der Energie an die einzelnen Teilnehmer wie z.B. private Haushalte, kleinere Industriebetriebe, etc. Für die Feinverteilung der Energie wird in einem Niederspannungsnetz z.B. in Mitteleuropa beispielsweise eine Spannung von 230/400 Volt bis zu 1000 Volt genutzt. Dazu wird die Energie von der Verteilungsebene bzw. dem Mittelspannungsbereich auf den Spannungsbereich des Niederspannungsnetzes bzw. -bereichs transformiert und dann an die Teilnehmer verteilt.

Ein Niederspannungsnetz wird üblicherweise radial - d.h. von einem Punkt (z.B. Bereich einer Hauptverteilung, Transformatorstation, etc.) ausgehend - betrieben und ist dazu in mehrere Stromführungszweige unterteilt, an welche dann die Teilnehmer angeschlossen sind. In Europa beispielsweise weisen die Stromführungszweige eine durchschnittliche Länge von ca. 0,3 bis 0,4 km auf und die Teilnehmer sind sehr knapp nebeneinander - z.B. in einem Abstand von ca. 0,015 bis 0,025 km - angeschlossen. Von den Teilnehmern wie z.B. privaten Haushalten, etc. wird einerseits Energie aus dem Niederspannungsnetz bezogen. Andererseits wird heutzutage durch Nutzung so genannter dezentraler Energieerzeugung, insbesondere Photovoltaik, von zumindest einem Teil der Teilnehmer auch vermehrt Energie in das Niederspannungsnetz zurückgespeist.

Unter Photovoltaik wird üblicherweise eine direkte Umwandlung von Lichtenergie, meist Sonnenstrahlung, in elektrische Energie mittels Solarzellen verstanden. Durch die dezentrale Einspeisung mittels Photovoltaik tritt in einem Niederspannungsnetz zeitweise (z.B. in Zeiten geringer Last) eine Umkehr der Lastflussrichtung und damit vermehrt eine unzulässige Spannungsanhebung auf. Die Energieerzeugung mittels Photovoltaik unterliegt außerdem einem typischen Tages- und Jahresgang, welcher zusätzlich durch eine Wetterabhängigkeit der Sonneneinstrahlung überlagert wird. D.h. die Einspeisung von Energie durch Teilnehmer, von welchen mittels Photovoltaik genutzt wird, ist damit starken Schwankungen unterworfen. Diese Schwankungen können in einem Niederspannungsnetz zu starken Spannungsschwankungen führen. Bei einer hohen Durchdringung von dezentraler Energieerzeugung mittels Photovoltaik kann es dadurch zu großen Unsicherheiten und Schwierigkeiten beim Betrieb von Niederspannungsnetzen kommen. Daher wird beispielsweise Niederspannungsnetz bei Verletzungen von Spannungsanhebungen durch kostenintensive Baumaßnahmen verstärkt oder es wird eine eingespeiste Energiemenge kontrolliert. Durch beides wird allerdings ein Ausbau der dezentralen Energieerzeugung verzögert oder beschränkt.

Eine derartige dezentrale Energieerzeugung und -einspeisung mittels Photovoltaik erfordert daher einen genaue Überwachung des Niederspannungsnetzbereichs bzw. insbesondere den darin genutzten Spannungsbereich und damit z.B. eine Anpassung von Netzmanagement- und Überwachungssystemen des Energieversorgungsnetzes. Aus der Schrift Witzmann, R., Esslinger P., Grass N., Girstl S., Keck R., Adelmann A.: "Verbesserung der Spannungsqualität und Aufnahmefähigkeit von Niederspannungsnetzen bei dezentraler Einspeisung durch intelligente Wechselrichter"; IETG Kongress, 08-09.11.2011, Würzburg, Deutschland. ist ein Verfahren bekannt, bei welchem mithilfe von in einem Niederspannungsnetz verteilten Wechselrichtern von Erzeugungsanlage Blindleistung bereitgestellt wird, um eine Aufnahmefähigkeit des Niederspannungsnetzes sowie die Spannungsqualität zu verbessern. Die dazu notwendige Ansteuerung der Wechselrichter erfordert aber im Netzgebiet eine verteilte Erfassung relevanter Netzkennwerte sowie eine zentrale Überwachung bzw. Regelung für die im Niederspannungsnetz verteilten Photovoltaik-Anlagen. Damit weist das in der oben genannten Schrift offenbarte Verfahren den Nachteil auf, dass - insbesondere bei größeren Niederspannungsnetzen und/oder vielen Photovoltaik-Anlagen für die Überwachung und Steuerung eine Vielzahl bzw. eine sehr große Menge von Daten online und in Echtzeit gesammelt und ausgewertet werden müssen. Derartige Datenmengen können allerdings mit den heutigen Netzmanagementsystemen, welche üblicherweise für Mittelspannungsnetze konzipiert sind, kaum bewältigt werden. Damit ist eine rasche Überwachung in Echtzeit eines Niederspannungsnetzes nicht zu gewährleisten.

Weiterhin wurde versucht, die wachsenden Anforderungen an eine Modellierung und Überwachung von Niederspannungsnetzen durch einen Einsatz von existierenden Managementsystemen wie z.B. von so genannten Distribution Management Systemen (DMS), welche üblicherweise für Mittelspannungsnetze entwickelt wurden, zu lösen. Ein Distribution Management System (DMS) ist dabei beispielsweise einen Sammlung von Anwendungen, welche entwickelt wurden, um ein Verteilnetz, insbesondere Mittelspannungsnetz, zuverlässig zu überwachen und zu kontrollieren. Auch ein Einsatz dieser Systeme weist den Nachteil auf, dass - insbesondere bei Verwendung von intelligenten Zählern und vielen Photovoltaik-Anlagen in einem Niederspannungsnetz - eine Vielzahl an Daten abgefragt, ausgewertet und/oder überwacht werden müssen, auf deren Verarbeitung derartige konventionelle Managementsysteme nicht oder kaum ausgelegt sind. Daher ist eine effiziente Überwachung von Niederspannungsnetzen mit dezentraler Energieerzeugung bzw. mit Nutzung von Photovoltaik in Echtzeit mit einem konventionellen Managementsystem wie z.B. DMS selbst mit teilweise kostenintensiven Anpassungen kaum möglich.

Aus der Schrift Bertani A., Borghetti A., Bossi C., DeBiase L., Lamquet O., Massuco S., Morini A., Nucci C.A., Paolone M., Quaia, E., Silvestro F.: "Management of Low Voltage Grids with High Penetration of Distributed Generation: concepts, implementations and experiments"; C6-304, CIGRE 2006. ist ein Verfahren für die Überwachung und das Management eines Niederspannungsnetzes bekannt. Dabei wird ein so genanntes Energy Management System (EMS) als Basis genutzt, um Zustände eines Niederspannungsnetzes zu überwachen. Ein Energy Management System ist ein System von computergestützten Werkzeugen, welche üblicherweise von Netzbetreibern eingesetzt werden, um z.B. Energieerzeugung und/oder Energieverteilung - vor allem in Hochspannungs- oder Mittelspannungsebene - überwachen, kontrollieren und optimieren zu können. Dabei wird von so genannten Pseudomessdaten für das zu analysierende Niederspannungsnetz ausgegangen, welche aus Lastprognosen und früheren Feldmessungen im Niederspannungsnetz abgeleitet werden. Diese Methode weist damit den Nachteil auf, dass insbesondere die starken und teilweise wetterabhängigen Schwankungen der Energieerzeugung mittels Photovoltaik sowie spezifische Charakteristika des Niederspannungsnetzes nicht berücksichtigt werden und die Überwachung des Niederspannungsnetzes damit nur sehr ungenau und unzuverlässig durchgeführt werden kann.

### Darstellung der Erfindung

Der Erfindung liegt daher die Aufgabe zugrunde, ein Verfahren zur Überwachung eines Niederspannungsnetzes sowie ein System zur Durchführung dieses Verfahrens anzugeben, durch welches auf einfache Weise eine zentrale Überwachung eines Niederspannungsnetzes bei Nutzung von Photovoltaik effizient und möglichst in Echtzeit mit korrekten Netzparametern ermöglicht wird.

Diese Aufgabe wird ein Verfahren der eingangs angeführten Art sowie durch eine System zur Durchführung dieses Verfahrens mit den Merkmalen gemäß den unabhängigen Patentansprüche gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem für jede Region zumindest ein Messgerät bei einem einspeisenden Teilnehmer ausgewählt wird, von welchem für den einspeisenden Teilnehmer Kennwerte gemessen und an ein zentrales Überwachungssystem gesendet werden. Weiterhin werden in jedem Stromführungszweig des Niederspannungsnetzes zumindest drei Messstellen angebracht werden, von welchen im jeweiligen Stromführungszweig Kennwerte gemessen und an das zentrale Überwachungssystem gesendet werden. Auf Basis der vom zumindest einen Messgerät je Region gemessenen Kennwerte werden dann Energieerzeugungswerte für die weiteren einspeisenden Teilnehmer der jeweiligen Region abgeschätzt und auf Basis dieser geschätzten Energieerzeugungswerte werden dann unter Verwendung der in den Stromführungszweigen der jeweiligen Region gemessenen Kennwerten und unter Verwendung von statischen elektrischen Parametern Netzzustände für das Niederspannungsnetz abgeschätzt.

Der Hauptaspekt der erfindungsgemäß vorgeschlagenen Lösung besteht darin, dass damit auf einfache und kostengünstige Weise ein sehr dynamisches Verhalten von Niederspannungsnetzen bei Nutzung von Photovoltaik überwacht werden kann. Durch das erfindungsgemäße Verfahren können Netzzustände mittels weniger Messpunkt - zumindest ein Messgerät je Region und zumindest drei Messstellen je Stromführungszweig - und mit einer geringen Anzahl an Messwerten sehr rasch ermittelt werden. Die geringe Anzahl an Messwerten, welche für die Durchführung des erfindungsgemäßen Verfahrens notwendig sind, können rasch - d.h. online und fast in Echtzeit - an das zentrale Überwachungssystem übertragen werden. Damit kann bei der Überwachung immer ein sehr aktueller Netzzustand des Niederspannungsnetzes abgeschätzt und entsprechende Reaktionen auf diesen Netzzustand können rasch veranlasst werden.

Es ist dabei von Vorteil, wenn aus den Kennwerten, welche von zumindest eine Messgerät für einen einspeisenden Teilnehmer einer jeweiligen Region gemessen werden, Parameter für eine Energieerzeugung mittels Photovoltaik für die jeweilige Region, insbesondere Sonnenstrahlung und Temperatur, ermittelt werden. Aus diesen je Region abgeschätzten Parametern, insbesondere Sonnenstrahlung und Temperatur, können dann sehr einfach zusammen mit statischen Teilnehmerparametern Energieerzeugungswerte für die weiteren einspeisenden Teilnehmer der jeweiligen Region berechnet werden. Es hat sich z.B. gezeigt, dass für Photovoltaik-Anlagen einer geografischen Region üblicherweise die Wetterverhältnisse ähnlich bzw. fast gleich sind. Daher kann für eine Berechnung einer Energieerzeugung der Photovoltaik-Anlagen einer Region von den gleichen (wetterabhängigen) Parametern für die Energieerzeugung ausgegangen werden. D.h., dass beispielsweise Sonneneinstrahlung und Temperatur in einer geografischen Region bzw. in einer Wetterregion für alle Anlagen gleich sind. Daher ist es ausreichend, dass für zumindest eine Photovoltaik-Anlage von einem Messgerät die Kennwerte gemessen werden. Daraus können dann sehr einfach die Parameter für die Energieerzeugung - wie z.B. Temperatur und Sonneneinstrahlung - für diese Region abgeschätzt werden. Mit Hilfe der statischen Teilnehmerparameter (z.B. Anlagengröße in der Region, Fläche der Solarzellen je Anlage, etc.), die z.B. von einem Netzbetreiber zur Verfügung gestellt werden, können dann sehr einfach Energieerzeugungswerte der weiteren Teilnehmer bzw. Photovoltaik-Anlagen der jeweiligen Region und damit eine Energieerzeugung für die jeweilige Region bestimmt werden. Für eine Erhöhung der Sicherheit und für eine Redundanz kann idealer Weise in jedem Stromführungszweig der jeweiligen Region ein Messgerät ausgewählt und die dort gemessenen Daten an das zentrale Überwachungssystem weitergeleitet werden. Damit kann außerdem eine bessere Genauigkeit bei der Ermittlung der Parameter für die Energieerzeugung (z.B. Temperatur, Sonneneinstrahlung) der jeweiligen Region erzielt werden.

Es ist auch besonders günstig, wenn die abgeschätzten Netzzustände z.B. vom zentralen Überwachungssystem anderen Anwendungen für eine Überwachung des Niederspannungsnetzes zur Verfügung gestellt werden. Von den abgeschätzten Netzzuständen für das Niederspannungsnetz wird dabei auf einfache Weise eine Datenbasis für diese weiteren bzw. weiterführenden Anwendungen zur Überwachung des Niederspannungsnetzes geliefert. Derartige weiterführende Anwendungen sind beispielsweise Anwendungen zur Kontrolle eines Blindwiderstands im Niederspannungsnetz, Anwendungen zur Lokalisierung von Fehlern insbesondere auf Basis von Informationen intelligenter Zähler bzw. so genannter Smart Meter sowie zur Fehlerisolation und Wiederherstellung von Diensten im Niederspannungsnetz, Anwendungen zur Identifikation von nicht technischen Verlusten im Niederspannungsnetz oder Anwendungen zur optimalen Um- oder Neukonfiguration von Stromführungszweigen im Niederspannungsnetz.

Idealer Weise werden die statischen Teilnehmerparameter sowie die statischen elektrischen Parameter des Niederspannungsnetzes wie z.B. eine Leitungsimpedanz von einem jeweiligen Netzbetreiber zur Verfügung gestellt. Die statischen Teilnehmerparameter wie z.B. Größen von Photovoltaik-Anlagen einer Region, Abmessungen der Photovoltaik-Anlagen, etc. können beispielsweise von einer Datenbank des jeweiligen Netzbetreibers für die Berechnung der Energieerzeugungswerte der weiteren Teilnehmer der Region geliefert werden. Weiterhin können auch statische elektrische Parameter des Niederspannungsnetzes wie z.B. eine Leitungsimpedanz aus einer Datenbank des Betreibers für die Abschätzung der Netzzustände geliefert werden, wodurch auf einfache Weise Eigenschaften des Niederspannungsnetzes bei der Abschätzung der Netzzustände berücksichtigt werden. Insbesondere von der Leitungsimpedanz werden die Eigenschaften von Leitungen bei der Übertragung von Strom bzw. Energie beschrieben. Von der Leitungsimpedanz, welche als eine Kombination aus Wirk- und Blindwiderstand (= Resistanz und Reaktanz) dargestellt wird, wird ein Verhältnis von Strom und Spannung, welche über die jeweilige Leitung übertragen werden, angegeben.

Alternativ kann bei einer zweckmäßigen Weiterbildung der Erfindung auch vorgesehen sein, dass die statischen elektrischen Parameter des Niederspannungsnetzes, insbesondere Leitungsimpedanzen von Subsystemen des Niederspannungsnetzes, auf Basis von Kennwerten, welche von den im Niederspannungsnetz verfügbaren Messgeräten und Messstellen an das zentrale Überwachungssystem gesendet werden, berechnet werden. Aufgrund dieser Berechnung der statischen elektrischen Parameter - insbesondere der Leitungsimpedanz von Subsystemen des Niederspannungsnetzes - werden aktuelle statische elektrische Parameter, von welchen die aktuellen Netzgegebenheiten im Niederspannungsnetz berücksichtigt werden, ermittelt und können somit in die Abschätzung von Netzzuständen einfließen. Dabei werden allerdings alle im Niederspannungsnetz verfügbaren Messgeräte, welche dazu idealer Weise als intelligente Zähler bzw. Smart Meter ausgestaltet sind, sowie alle Messstellen in den Stromführungszweigen abgefragt. Die von den Messgeräten und Messstellen gelieferten Daten können dann beispielsweise langsam und off-line an das zentrale Überwachungssystem zur Berechnung der statischen elektrischen Parameter übertragen werden. Derartige Berechnungen können z.B. beim Aufbau eines Niederspannungsnetzes oder nach einer Neukonfiguration eines Niederspannungsnetzes durchgeführt werden. Die Abfrage der Messdaten der Messgeräte und Messstellen wird dabei beispielsweise auf Anforderung durch das zentrale Überwachungssystem angestoßen. Die berechneten statischen elektrischen Parameter können z.B. dann in einer Datenbank abgespeichert und so für die Abschätzung der Netzzustände zur Verfügung gestellt werden.

Bei einer derartigen Berechnung werden auf vorteilhafte Weise auf Basis der gesamten gemessenen Kennwerte zuerst die statischen elektrischen Parameter, insbesondere die Leitungsimpedanz, für die Leitungssegmente einen Stromführungszweig iterativ berechnet, wobei ein Leitungssegment jener Abschnitt eines Stromführungszweigs zwischen zwei Teilnehmer ist. Dabei werden unterschiedliche verfügbare Kennwertesets, welche z.B. von den Messgeräten beim jeweiligen Teilnehmer gemessen und übermittelt wurden, verwendet und die statischen Parameter berechnet, bis von einer Differenz aufeinanderfolgender Parameterwerte eine vorgegebene Genauigkeit unterschritten wird. Damit wird eine sehr genaue Berechnung der statischen elektrischen Parameter - vor allem der Leitungsimpedanz - des jeweiligen Leitungssegments erhalten. Aus den für die Leitungssegmente berechneten Parameterwerten werden dann in der Folge die statischen elektrischen Parameter wie die Leitungsimpedanz für die jeweiligen Stromführungszweige und daraus für die Subsysteme eines Niederspannungsnetzes berechnet. Diese Werte weisen einerseits eine hohe Genauigkeit auf und entsprechen idealer Weise den jeweiligen Gegebenheiten im Niederspannungsnetz.

Es ist vorteilhaft, wenn die zumindest drei Messstellen je Stromführungszweig zumindest an einem Anfang, bei einem Lastzentrum und an einem Ende des jeweiligen Stromführungszweiges angebracht werden. Durch diese Auswahl von Messpunkten für die zumindest drei Messstellen in einem Stromführungszweig können sehr einfach und rasch Veränderungen z.B. bei der Lastflussrichtung, bei der Spannung im Stromführungszweig, etc. festgestellt werden. Üblicherweise sind Niederspannungsnetze radial ausgeführt - d.h. die Stromführungszweige, an welche die Teilnehmer angeschlossen sind, werden von einem Punkt (z.B. Bereich einer Hauptverteilung, Transformatorstation, etc.) ausgehend betrieben. Ein Spannungsprofil in einem radialen Stromführungszweig weist z.B. einen niedrigen Schwellewert im Bezug auf Lastprofile auf. Durch die Platzierung der Messstellen im jeweiligen Stromzweig können sehr einfach Schwankungen der Last wie der Spannung aufgrund dezentraler Energieerzeugung, insbesondere Photovoltaik, berücksichtigt werden.

Es ist auch günstig, wenn als Kennwerte von dem zumindest einen Messgerät je Region und den zumindest drei Messstellen je Stromführungszweig ein Wirkleistungswert, ein Blindleistungswert und ein Spannungswert gemessen werden. Kennwerte wie Wirkleistung, Blindleistung und Spannung können auf sehr einfache Weise sowohl für die Teilnehmer im Niederspannungsnetz als auch in den Stromführungszweigen des Niederspannungsnetzes gemessen werden. Diese gemessenen Kennwerte können dann - insbesondere beim Einsatz von intelligenten Zählern bzw. Smart Metern als Messgeräte - sowohl für die Abschätzung von Netzzuständen als auch für die Berechnung der statischen elektrischen Parameter, insbesondere der Leitungsimpedanz, herangezogen werden.

Idealerweise werden für das erfindungsgemäße Verfahren intelligente Zähler, so genannte Smart Meter, als Messgerät verwendet. Ein intelligenter Zähler, welcher auch als Smart Meter bezeichnet wird, ist ein Zähler für z.B. Energie bzw. Strom, von welchem dem jeweiligen Teilnehmer ein tatsächlicher Energieverbrauch und eine tatsächliche Nutzungszeit angezeigt werden. Derartige Zähler können beispielsweise von einem Mikroprozessor gesteuert werden und bieten z.B. die Möglichkeit zur Fernübertragung der von ihnen gemessenen Kennwerte und Daten. Diese Messdaten können dann sehr einfach über ein Kommunikationsmedium automatisch oder nach Abfrage an z.B. den Betreiber des Niederspannungsnetzes, eine Energieversorgungsunternehmen oder z.B. an ein zentrales Überwachungssystem übertragen werden. Dabei können z.B. ausgewählte intelligente Zähler oder alle im Niederspannungsnetz verfügbaren intelligenten Zähler je nach Bedarf abgefragt werden.

Die Messstellen je Stromführungszweig sind beispielsweise in vorteilhafter Weise als so genannte Rogowski-Messzähler als ausgestaltet. Mit einem derartigen Messzähler kann sehr einfach eine Messung von Kennwerten eines Wechselstroms z.B. in einem Stromführungszweig durchgeführt werden. Üblicherweise umfasst ein derartiges Messgerät eine so genannte Rogowski-Spule. Ein Rogowski-Messgerät kann sehr einfach dazu eingesetzt werden, einen tatsächlichen Schaltungszustand z.B. eines Stromführungszweigs in einem Niederspannungsnetz festzustellen. Mit einem Rogowski-Messgerät können Strommessungen bis zu 1000 Ampere durchgeführt werden und das Messgerät kann sehr einfach mobil und flexibel in einem Stromführungszweig installiert werden - z.B. ohne Leiter und/oder Kabel für die Installation zu durchtrennen.

Für eine Übertragung der gemessenen Kennwerte von einem jeweiligen Messgerät und/oder einer jeweiligen Messstelle wird zum zentralen Überwachungssystem in vorteilhafter Weise eine so genannte Powerline Communication (PLC) bzw. als Kommunikationsmedium ein so genannter Distribution Line Carrier (DLC) genutzt. Durch eine Verwendung von PLC bzw. DLC für die Kommunikation bzw. Übertragung der Messdaten muss kein zusätzliches Kommunikationsmedium (z.B. Telefondraht, Funkverbindung, etc.) für die Datenübertragung zum zentralen Überwachungssystem installiert werden. Die Daten werden dabei direkt z.B. über die jeweiligen Stromführungszweige des Niederspannungsnetzes weitergeleitet. Powerline Communication oder PLC oder DLC bezeichnet dabei eine Technik, bei welcher vorhandene Leitungen und/oder Kabel für eine Übertragung von Daten zumindest mitgenutzt werden. Bei PLC werden die zu übertragenden Daten z.B. mittels Kommunikationseinheiten wie z.B. intelligente Zähler auf die Leitungen des Niederspannungsnetzes aufmoduliert und z.B. vom zentralen Überwachungssystem von diesen wieder heruntergefiltert, ohne dass die Kommunikationseinheiten für die Datenübertragung durch die auf den Stromversorgungsnetz herrschende Spannung und/oder Netzfrequenz gestört wird.

Für eine Übertragung der gemessenen Kennwerte innerhalb des zentralen Überwachungssystems ist es vorteilhaft, wenn zumindest zwei Verbindungen für eine Datenübertragung mit unterschiedlichen Übertragungsgeschwindigkeiten verwendet werden. Damit können beispielsweise gemessene Kennwerte für die Abschätzung von Netzzuständen rasch innerhalb des zentralen Überwachungssystems über eine zumindest erste Verbindung mit hoher Übertragungsgeschwindigkeit weitergeleitet und für die Ermittlung der Abschätzung sehr schnell zur Verfügung gestellt werden. Die gemessenen Kennwerte für die Berechnung der statischen elektrischen Parameter, welche eine große Datenmenge darstellen, da die Berechnung auf Basis der gesamten gemessenen Kennwerte durchgeführt wird, können dann über eine zweite Verbindung mit einer geringeren Übertragungsgeschwindigkeit innerhalb des zentralen Überwachungssystems weitergeleitet werden, da eine derartige Berechnung nicht so häufig durchgeführt wird.

Weiterhin erfolgt die Lösung der Aufgabe durch ein System der eingangs erwähnten Art zur Durchführung des erfindungsgemäßen Verfahrens, bei welchem für jede Region zumindest ein Messgerät und für jeden Stromführungszweig zumindest drei Messstellen vorgesehen sind, und welches weiterhin ein zentrales Überwachungssystem umfasst. Dieses Überwachungssystem besteht dabei zumindest aus einer Datenbündelungseinrichtung, einer Überwachungs- und Steuereinrichtung und einer Einheit zum Abschätzen von Netzzuständen, in welcher die von dem zumindest einen Messgerät je Region und den zumindest drei Messstellen je Stromführungszweig gemessenen Kennwerte unter Verwendung von statischen Teilnehmerparametern und statischen elektrischen Parametern verarbeitbar sind.

Der Hauptaspekt des erfindungsgemäßen Systems besteht darin, dass damit kostengünstig und rasch ein dynamisches Verhalten eines Niederspannungsnetzes in annähernder Echtzeit überwacht werden kann und sehr einfach Netzzustände abgeschätzt werden können. Durch eine Auswahl und Einschränkung der Messpunkte - an zumindest ein Messgerät je Region und zumindest drei Messstellen je Stromführungszweig werden die entsprechenden Kennwerte für die Abschätzung gemessen - können die Messwerte der Kennwerte (z.B. Wirkleistung, Blindleistung, Spannung) fast simultan gesammelt und rasch an das zentrale Überwachungssystem für eine aktuelle Abschätzung des jeweiligen Netzzustands des Niederspannungsnetz übermittelt werden. Damit kann bei der Überwachung immer ein sehr aktueller Netzzustand des Niederspannungsnetzes abgeschätzt und entsprechende Reaktionen auf diesen Netzzustand können rasch veranlasst werden.

Eine bevorzugte Weiterentwicklung des erfindungsgemäßen Verfahrens sieht vor, dass das zentrale Überwachungssystem weiterhin eine Einheit zum Berechnen der statischen elektrischen Parameter, insbesondere von Leitungsimpedanzen für Subsysteme des Niederspannungsnetzes aufweist. Mit dieser Einheit können dem tatsächlichen Niederspannungsnetzaufbau entsprechende statische elektrische Parameter - insbesondere der Leitungsimpedanz von Subsystemen des Niederspannungsnetzes - berechnet werden. Dazu werden von der Einheit zum Berechnen der statischen elektrischen Parameter allerdings alle im Niederspannungsnetz verfügbaren Messgeräte (z.B. Smart Meter) und Messstellen abgefragt und die gemessenen Kennwerte (z.B. Spannung, Wirkleistung, Blindleistung) dann off-line an die Einheit zum Berechnen der statischen elektrischen Parameter übertragen, da eine derartige Berechnung beispielsweise nur auf Anforderung durch das Überwachungssystem oder beim Netzaufbau bzw. -umbau durchgeführt wird. Die berechneten statischen elektrischen Parameter können dann z.B. an die Einheit zum Abschätzen von Netzzuständen des zentralen Überwachungssystems für die Ermittlung aktueller Netzzustände genutzt werden.

In vorteilhafter Weise ist als Kommunikationsmedium für eine Übertragung der gemessenen Kennwerte durch die Messgeräte bei den Teilnehmern, welche idealer Weise als intelligente Zähler oder Smart Meter ausführbar sind, sowie durch die Messstellen in den Stromführungszweigen, als welche so genannte Rogowski-Messzähler einsetzbar sind, zum zentralen Überwachungssystem eine so genannte Powerline Communication (PLC) bzw. ein so genannter Distribution Line Carrier (DLC) einsetzbar. Damit muss vom erfindungsgemäßen System für eine Übertragung der Messdaten von den jeweiligen Messgeräten bzw. Messstellen im Niederspannungsnetz zum zentralen Übertragungssystem kein einiges Kommunikationsmedium genutzt werden. Die Messwerte für die Kennwerte wie z.B. Spannung, Wirkleistung, Blindleistung, etc. werden auf einfache und rasche Weise direkt über die Leitungen/Kabel des Niederspannungsnetzes übertragen und vom zentralen Übertragungssystem dann von diesem heruntergefiltert.

Für eine Datenübertragung innerhalb des zentralen Überwachungssystems sind in vorteilhafter Weise zumindest zwei Kommunikationsverbindungen bzw. Verbindungen mit unterschiedlichen Übertragungsgeschwindigkeiten vorgesehen. Über eine zumindest erste Verbindung, welche für eine rasche Weiterleitung von Daten ausgelegt ist, werden die gemessenen Kennwerte von der Datenbündelungseinrichtung über die Überwachungs- und Steuereinrichtung rasch an die Einheit zum Abschätzen von Netzzuständen übertragen. Eine zumindest zweite Verbindung, welche eine niedrigere Datenübertragungsgeschwindigkeit aufweist, wird für einen Datentransport innerhalb des zentralen Überwachungssystems von der Datenbündelungseinrichtung über die Überwachungs- und Steuereinrichtung an die Einheit zum Berechnen der statischen elektrischen Parameter genutzt. Damit können einerseits die gemessenen Kennwerte für eine Abschätzung eines Netzzustands (d.h. eine geringe Datenmenge von ausgewählten Messgeräten und Messstellen) rasch zur Einheit zum Abschätzen von Netzzuständen geleitet werden und werden innerhalb des zentralen Überwachungssystems nicht von einer wesentlich langsamer Übertragung der großen Anzahl an Kennwerten, welche für eine Berechnung der statischen elektrischen Parameter benötigt werden, behindert.

### Kurzbeschreibung der Zeichnung

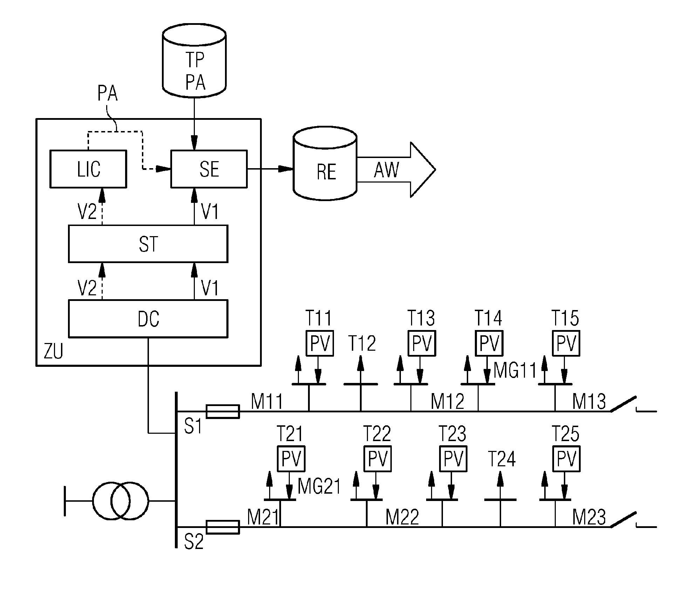

Die Erfindung wird nachfolgend in beispielhafter Weise anhand der beigefügten Figur erläutert. Figur 1 zeigt dabei schematisch und beispielhaft ein erfindungsgemäßen System zur Überwachung eines Niederspannungsnetzes mit Nutzung von Photovoltaik sowie einen beispielhaften Ablauf des erfindungsgemäßen Verfahrens.

### Ausführung der Erfindung

Figur 1 zeigt in schematischer Weise und beispielhaft das erfindungsgemäße System zur Durchführung des erfindungsgemäßen Verfahrens zur Überwachung eines anhand zweier beispielhaft und schematisch dargestellter Stromführungszweige S1, S2 dargestellten Niederspannungsnetzes. Von den beiden beispielhaft dargestellten Stromführungszweigen S1, S2 kann z.B. eine Region oder auch zwei verschiedene Regionen mit Energie versorgt werden. An die Stromführungszweige S1, S2, welche als radiale Stromführungszweige S1, S2 ausgeführt sind und daher von einem Punkt ausgehend betrieben werden, sind die Teilnehmer T11 bis T25 des Niederspannungsnetzes angeschlossen. Die Teilnehmer T11 bis T15 werden dabei über einen ersten Stromführungszweig S1 mit dem Niederspannungsnetz verbunden. Die Teilnehmer T21 bis T25 sind über einen zweiten Stromführungszweig S2 an das Niederspannungsnetz angebunden. Von einem Großteil der Teilnehmer T11 bis T25 wird nicht nur Energie aus dem Niederspannungsnetz entnommen, sondern mittels Photovoltaik-Anlagen PV Energie erzeugt und in das Netz zurückgespeist. Nur ein beispielhafter Teilnehmer T12 bzw. ein beispielhafter Teilnehmer T24 ist ein reiner Verbraucher und liefert keine Energie an das Niederspannungsnetz zurück. Das erfindungsgemäße System zur Durchführung des erfindungsgemäßen Verfahrens zur Überwachung eines Niederspannungsnetzes bei Nutzung von Photovoltaik PV weist dabei zumindest ein Messgerät MG11, MG21 für jede vom Niederspannungsnetz abgedeckte Region auf sowie zumindest drei Messstellen M11 bis M23 je Stromführungszweig S1, S2 des Niederspannungsnetz. Weiterhin umfasst das erfindungsgemäße System ein an das Niederspannungsnetz angebundenes zentrales Überwachungssystem ZU, welches auch mehreren Einheiten verwerten im Niederspannungsnetz gemessener Kennwerte, insbesondere Spannung, Wirkleistung und Blindleistung, besteht.

In Figur 1 sind beispielsweise im ersten Stromführungszweig S1 ein erstes Messgerät MG11 bei einem mittels Photovoltaik PV Energie einspeisenden Teilnehmer T14 vorgesehen. Im zweiten Stromführungszweig S2 ist ebenfalls ein zweites Messgerät MG21 vorgesehen, welches bei einem mittels Photovoltaik PV Energie erzeugenden Teilnehmer T21 angebracht ist. Wird von den beiden Stromführungszweigen S1, S2 die gleiche (geografische) Region mit Energie versorgt bzw. sind an diese beiden Stromführungszweige S1, S2 einspeisende Teilnehmer T11 bis T25 der gleichen Region angeschlossen, so kann eines der beiden Messgeräte MG11, MG21 zur Redundanz und Sicherheit dienen. Als Messgeräte MG11, MG21 werden dabei idealer Weise intelligente Zähler oder so genannte Smart Meter eingesetzt, von welchen Kennwerte wie z.B. Spannung, Wirkleistung, Blindleistung, etc. für den jeweiligen Teilnehmer T14, T21 gemessen werden und über das Niederspannungsnetz als Kommunikationsmedium z.B. mittels Powerline Communication bzw. DLC an das zentrales Überwachungssystem ZU des erfindungsgemäßen System gesendet werden.

Weiterhin sind in den Stromführungszweigen S1, S2 zumindest drei Messstellen M11 bis M23 je Stromführungszweig S1, S2. Der erste Stromführungszweig S1 weist z.B. die Messstellen M11 bis M13 auf, wobei eine erste Messstelle M11 am Anfang, eine zweite Messstelle M12 bei einem Lastzentrum und eine dritte Messstelle M13 am Ende des ersten Stromführungszweigs S1 angebracht sind. Im zweiten Stromführungszweig S2 sind z.B. ebenfalls drei Messstellen M21, M22, M23 - am Anfang, bei einem Lastzentrum und am Ende des zweiten Stromführungszweigs S2 vorgesehen. Diese Messstellen M11 bis M23 können beispielsweise als so genannte Rogowski-Messzähler ausgeführt sein. Von den Messstellen M11 bis M23 werden Kennwerte (z.B. Spannung, Wirkleistung, Blindleistung) für den jeweiligen Stromführungszweig S1, S2 ermittelt und dann z.B. ebenfalls mittels Powerline Communication bzw. DLC an das zentrale Überwachungssystem übertragen.

Idealer Weise wird eine Messung und Übertragung der Kennwerte durch die ausgewählten Messgeräten MG11, MG21 je Region bzw. den Messstellen M11 bis M23 je Stromzweig S1, S2 möglichst simultan durchgeführt. Für eine Überwachung eines Niederspannungsnetzwerks werden die Kennwerte z.B. zyklisch (z.B. ca. alle 20 Sekunden) gemessen und an das zentrale Überwachungssystem ZU gesendet. Das zentrale Überwachungssystem ZU weist dabei eine Datenbündelungseinrichtung DC auf, von welcher die von den Messgeräten MG11, MG23 bzw. von Messstellen M11 bis M23 gemessenen und gesendeten Kennwerte empfangen werden. Durch die Datenbündelungseinrichtung DC können die empfangenen Kennwerte beispielsweise gebündelt bzw. etwas zusammengefasst werden. Die Kennwerte werden dann zuerst über eine erste interne, schnelle Verbindung V1 des zentralen Überwachungssystems ZU an eine Überwachungs- und Steuereinrichtung ST des zentralen Überwachungssystems ZU weitergeleitet bzw. die Kennwerte werden von der Überwachungs- und Steuereinrichtung ST, welche z.B. als so genannte Supervisory Control and Data Acquisition bzw. SCADA ausgeführt sein kann, erfasst.

Von der Überwachungs- und Steuereinrichtung ST werden die gemessenen Kennwerte einer Einheit SE zum Abschätzen von Netzzuständen des zentralen Überwachungssystems ZU zur Verfügung gestellt. In dieser Einheit SE werden die von dem zumindest einen Messgerät MG11, MG21 gemessenen Kennwerte sowie die von den Messstellen M11 bis M23 je Stromführungszweig S1, S2 gemessenen Kennwerte unter Verwendung von Teilnehmerparametern TP und statischen elektrischen Parametern PA des Niederspannungsnetzes weiterverarbeitet. Die Einheit SE zum Abschätzen von Netzzuständen kann beispielsweise auf einem so genannten Distribution System State Estimator oder DSSE basieren, der insbesondere in Energieverteilungsnetzen für eine Überwachung von Verteilungsnetzen eingesetzt wird.

Die Teilnehmerparameter TP, von welchen insbesondere Parameter der in den jeweiligen Regionen installierten Photovoltaik-Anlagen PV beschrieben werden, können z.B. vom Netzbetreiber, etc. zur Verfügung gestellt werden. Die statischen elektrischen Parameter PA wie z.B. eine Leitungsimpendanz für Subsysteme, Stromführungszweige S1, S2, etc. des Niederspannungsnetzes, können ebenfalls z.B. mittels einer Datenbank vom Netzbetreiber zur Verfügung gestellt werden.

Alternativ besteht allerdings die Möglichkeit die statischen elektrischen Parameter PA, insbesondere die Leitungsimpedanzen, auf Basis der im Niederspannungsnetz mittels Messgeräten MG11, MG21 und Messstellen M11 bis M23 gemessenen Kennwerte wie z.B. Spannung, Wirkleistung, Blindleistung, etc. für die jeweils aktuelle Netzkonfiguration zu berechnen. Dazu ist es allerdings notwendig, dass bei allen Teilnehmern T11 bis T25 des Niederspannungsnetzes als Messgerät MG1, MG21 intelligente Zähler bzw. Smart Meter angebracht sind. Das zentrale Überwachungssystem ZU weist dazu weiterhin eine Einheit LIC zum Berechnen der statischen elektrischen Parameter PA (z.B. Leitungsimpendanzen) auf. Für eine Berechnung der statischen elektrischen Parameter PA werden beispielsweise die gemessenen Kennwerte von allen Messgeräten MG11, MG21 aller Teilnehmer T11 bis T25 des Niederspannungsnetzes sowie gemessenen Kennwerte der Messstellen M11 bis M23 der Stromführungszweige S1, S2 von der Überwachungs- und Steuereinheit ST z.B. bei einem Netzaufbau oder -umbau angefordert. Die entsprechenden Daten werden dann von den Messgeräten MG11, MG23 und den Messstellen M11 bis M23 über das Niederspannungsnetz zur Datenbündelungseinrichtung DC gesendet und von dieser über eine zweite - langsame - Überwachungssystem ZU interne Verbindung V2 an die Überwachungs- und Steuereinheit ST übertragen. Von dort können die im gesamten Netz gemessenen Kennwerte dann von der Einheit LIC zum Berechnen der statischen elektrischen Parameter PA herangezogen werden.

Auf Basis dieser gemessenen Kennwerte bzw. Kennwertsets (z.B. Spannung, Wirkleistung, Blindleistung) werden zuerst iterativ die Impedanzen der jeweiligen Leitungssegmente berechnet. Ein Leitungssegment ist dabei beispielsweise ein Abschnitt auf einem Stromführungszweig S1, S2 zwischen zwei Teilnehmer T11 bis T25. Ein Leitungssegment ist z.B. das Leitungsstück des ersten Stromführungszweigs S1 zwischen dem Teilnehmer T14 und T15. Dabei wird die Impedanz des Leitungssegments mit unterschiedlichen, verfügbaren Kennwertsets ermittelt und diese Berechung so lange wiederholt, bis von einer Differenz zweier aufeinanderfolgender berechneter Parameterwerte PA bzw. Impendanzwerte für das jeweilige Leitungssegment eine vorgegebene Genauigkeit unterschritten wird. Wurden alle statischen elektrischen Parameter PA für die Leitungssegmente eines Stromführungszweigs S1, S2 berechnet, so werden die Ergebnisse z.B. anhand eines Energieflusses für den jeweiligen Stromführungszweig S1, S2 geprüft und gegebenenfalls noch angepasst. Dann werden daraus die statischen elektrischen Parameter PA bzw. die Leitungsimpedanz für den jeweiligen Stromführungszweig S1, S2 abgeleitet. Anhand des Energieflusses können dann aus den geprüften und gegebenenfalls noch abgeglichenen statischen elektrischen Parameter PA bzw. den Impedanzen der Stromführungszweige S1, S2 die statischen elektrischen Parameter PA für die jeweiligen Subsysteme des Niederspannungsnetzes ermittelt werden. Nach einer abschließenden Prüfung und Adjustierung dieser berechneten Parameter PA können diese dann z.B. der Einheit zum Abschätzen von Netzzuständen SE oder auch anderen Anwendungen AW für eine Überwachung des Niederspannungsnetzes zur Verfügung gestellt werden. Da für diese Ermittlung der statischen elektrischen Parameter PA eine große Menge an Messwerten aus dem Netz notwendig ist und die Datenübertragung aufgrund der Menge langsam erfolgt, wird diese Ermittlung nur auf entsprechende Anfrage z.B. von der Überwachungs- und Steuereinheit ST bei entsprechendem Bedarf - z.B. Neukonfiguration des Netzes, Netzausbau, etc. - durchgeführt, um die entsprechenden aktuellen und der Netztopologie entsprechenden statischen elektrischen Parameter zu erhalten.

Die Abschätzung von Netzzuständen des Niederspannungsnetzes wird auf Basis von rasch - fast in Echtzeit - übertragenen und zyklisch abgefragten wenigen gemessenen Kennwerten aus dem Niederspannungsnetz von der Einheit SE zum Abschätzen von Netzzuständen des zentralen Überwachungssystems ZU durchgeführt. Dabei werden zuerst auf Basis von Messwerten eines Messgeräts MG11, MG21 eines Energie einspeisenden Teilnehmers T14, T21 je Region Energieerzeugungswerte für die weiteren Teilnehmer T11 bis T25 der Region, von welchen mittel Photovoltaik PV Energie erzeugt wird, abgeschätzt.

So werden z.B. auf Basis der im Messgerät MG11 des Teilnehmers T14 gemessenen Kennwerte und unter zu Hilfenahme der Teilnehmerparameter TP (z.B. Geometrie der Photovoltaik-Anlage, Type, etc.) für diesen Teilnehmer T14 Parameter für die Energieerzeugung mittels Photovoltaik PV für jene Region bestimmt, in welcher die Photovoltaik-Anlage PV dieses Teilnehmer T14 angebracht ist. Derartige Parameter für die Energieerzeugung sind z.B. Temperatur, Sonneneinstrahlung, Wind, etc. Diese Parameter für die Energieerzeugung für die Region werden dann genutzt, um die Energieerzeugung auf Basis der jeweiligen Teilnehmerparameter TP (z.B. Geometrie der Photovoltaik-Anlage, Type, etc.) für die anderen Energie erzeugenden Teilnehmer dieser Region abzuschätzen - in Figur 1 z.B. die Teilnehmer T11, T13, T15, T21, T22, T23, T25 - sofern vom zweiten Stromzweig S2 die selbe geografische bzw. Wetterregion abgedeckt wird. Die berechnete Energieerzeugung und die nominelle Spannung der jeweiligen Photovoltaik-Anlagen werden dann für einen Iterationsprozess genutzt, um die jeweilige Energieerzeugung bzw. Spannungswerte neu zu berechnen und damit eine verbesserte Abschätzung der Energieerzeugungswerte für die jeweiligen Teilnehmer T11 bis T25 in der jeweiligen Region zu erhalten.

Auf Basis der geschätzten Energieerzeugungswerte - je Teilnehmer T11 bis T25 bzw. je Region werden dann von der Einheit SE zum Abschätzen von Netzzuständen unter Verwendung der in den Stromführungszweigen S1, S2 der jeweiligen Region gemessenen Kennwerte (z.B. Spannung, Wirkleistung, Blindleistung) und unter Verwendung der statischen elektrischen Parameter PA - entweder vom Betreiber zur Verfügung gestellt oder von der Einheit LIC zum Berechnen der statischen elektrischen Parameter PA ermittelt und z.B. in einer Datenbank gespeichert - Netzzustände für das Niederspannungsnetz abgeschätzt. Die Ergebnisse RE dieser Abschätzungen können dann z.B. in einer Datenbank abgelegt und/oder weiteren Anwendungen AW zur Überwachung von Niederspannungsnetzen zur Verfügung gestellt werden.

Da für die Abschätzung von Netzzuständen nur eine relativ geringe Zahl an Messdaten - z.B. zumindest ein Messgerät MG11, MG21 je Region oder gegebenenfalls für Sicherheit und Redundanz ein Messgerät MG11, MG21 je Stromführungszweig S1, S2 je Region und nur wenige Messstellen je Stromführungszweig S1, S2 - herangezogen werden, kann die Übertragung der Messdaten sehr rasch erfolgen bzw. innerhalb des zentralen Überwachungssystems ZU für die Weiterleitung einen erste schnelle Verbindung V1 zum Datentransport eingesetzt werden. Die Einheit SE zum Abschätzen von Netzzuständen ist ebenfalls auf die Verarbeitung von einem Minimum an Messdaten ausgelegt und kann daher sehr rasch ein Ergebnis bzw. eine Abschätzung des jeweiligen Netzzustands im Niederspannungsnetz liefern.

## Patentansprüche

1. Verfahren zur Überwachung eines Niederspannungsnetz bei einer Nutzung von Photovoltaik (PV), wobei von Niederspannungsnetz mehrere Regionen abgedeckt werden und das Niederspannungsnetz in mehrere Stromführungszweige (S1, S2) unterteilt ist, an welche Teilnehmer (T11, ..., T25) des Niederspannungsnetzes angeschlossen sind, und wobei von diesen Teilnehmern (T11, ..., T25) aus dem Niederspannungsnetz Energie bezogen und von zumindest einem Teil der Teilnehmer (T11, ..., T25) Energie mittels Photovoltaik erzeugt und in das Niederspannungsnetz eingespeist wird, **dadurch gekennzeichnet, dass** für jede Region zumindest ein Messgerät (MG11, MG21) bei einem einspeisenden Teilnehmer (T14, T21) ausgewählt wird, von welchem für den einspeisenden Teilnehmer (T14, T21) Kennwerte gemessen und an ein zentrales Überwachungssystem (ZU) gesendet werden,
dass in jedem Stromführungszweig (S1, S2) zumindest drei Messstellen (M11, ..., M23) angebracht werden, von welchen im jeweiligen Stromführungszweig (S1, S2) Kennwerte gemessen und an das zentrale Überwachungssystem gesendet werden,
dass dann auf Basis der vom zumindest einen Messgerät (MG11, MG21) je Region gemessenen Kennwerte Energieerzeugungswerte für die weiteren einspeisenden Teilnehmer (T11, ..., T25) der jeweiligen Region abgeschätzt werden, dass dann auf Basis der geschätzten Energieerzeugungswerte unter Verwendung der in den Stromführungszweigen (S1, S2) der jeweiligen Region gemessenen Kennwerten und unter Verwendung von statischen elektrischen Parametern (PA) Netzzustände (RE) für das Niederspannungsnetz abgeschätzt werden.

2. Verfahren nach Anspruch 1, **dadurch gekennzeichnet, dass** aus den Kennwerten, welche vom zumindest eine Messgerät (MG11, MG21) für einem einspeisenden Teilnehmer (T14, T21) einer jeweiligen Region gemessen werden, Parameter für eine Energieerzeugung mittels Photovoltaik (PV) für die jeweilige Region, insbesondere Sonnenstrahlung und Temperatur, ermittelt werden, und dass dann diese je Region abgeschätzten Parameter, insbesondere Sonnenstrahlung und Temperatur, zusammen mit statischen Teilnehmerparametern (TP) für eine Berechnung der Energieerzeugungswerte für die weiteren einspeisenden Teilnehmer (T11, ..., T25) der jeweiligen Region herangezogen werden.

3. Verfahren nach einem der Ansprüche 1 bis 2, **dadurch gekennzeichnet, dass** die abgeschätzten Netzzustände (RE) für andere Anwendungen (AW) zur Überwachung des Niederspannungsnetzes zur Verfügung gestellt werden.

4. Verfahren nach einem der Ansprüche 1 bis 3, **dadurch gekennzeichnet, dass** die statischen Teilnehmerparameter (TP) und die statischen elektrischen Parameter (PA) des Niederspannungsnetzes, insbesondere eine Leitungsimpedanz, von einem jeweiligen Netzbetreiber zur Verfügung gestellt werden.

5. Verfahren nach einem der Ansprüche 1 bis 4, **dadurch gekennzeichnet, dass** die statischen elektrischen Parameter (PA) des Niederspannungsnetzes, insbesondere eine Leitungsimpedanz von Subsystemen des Niederspannungsnetzes, auf Basis von Kennwerten, welche von den im Niederspannungsnetz verfügbaren Messgeräten (MG11, MG21) und Messstellen (M11, ..., M23) an das zentrale Überwachungssystem (ZU) gesendet werden, berechnet werden.

6. Verfahren nach Anspruch 5, **dadurch gekennzeichnet, dass** auf Basis der gesamten gemessenen Kennwerte zuerst die statischen elektrischen Parameter (PA), insbesondere die Leitungsimpedanz, für Leitungssegmente iterativ unter Verwendung unterschiedlicher Kennwertesets berechnet werden bis von einer Differenz zweier aufeinanderfolgender Parameterwerte eine vorgegebene Genauigkeit unterschritten wird, dass dann daraus die statischen elektrischen Parameter (PA), insbesondere die Leitungsimpedanz, der einzelnen Stromführungszweige (S1, S2) ermittelt werden, und dass dann aus den ermittelten statischen elektrischen Parametern (PA), insbesondere der Leitungsimpedanz, der Stromführungszweige (S1, S2) die statischen elektrischen Parameter, insbesondere die Leitungsimpedanz, für die Subsysteme des Niederspannungsnetzes bestimmt werden.

7. Verfahren nach einem der vorangegangenen Ansprüche, **dadurch gekennzeichnet, dass** die zumindest drei Messstellen (M11, ..., M23) je Stromführungszweig (S1, S2) zumindest an einem Anfang, bei einem Lastzentrum und an einem Ende des jeweiligen Stromführungszweiges (S1, S2) angebracht werden.

8. Verfahren nach einem der vorangegangenen Ansprüche, **dadurch gekennzeichnet, dass** als Kennwerte von dem zumindest einen Messgerät je Region und den zumindest drei Messstellen je Stromführungszweig ein Wirkleistungswert, ein Blindleistungswert und ein Spannungswert gemessen werden.

9. Verfahren nach einem der vorangegangenen Ansprüche, **dadurch gekennzeichnet, dass** als Messgerät (MG11, MG21) ein intelligenter Zähler verwendet wird.

10. Verfahren nach einem der vorangegangenen Ansprüche, **dadurch gekennzeichnet, dass** als Messstelle (M11, ..., M23) ein so genannter Rogowski-Messzähler verwendet wird.

11. Verfahren nach einem der vorangegangenen Ansprüche, **dadurch gekennzeichnet, dass** für eine Übertragung der gemessenen Kennwerte von einem Messgerät (MG11, MG21) oder von einer Messstelle (M11, ..., M23) zum zentralen Überwachungssystem eine so genannte Powerline Communication genutzt wird, und dass innerhalb des zentralen Überwachungssystems (ZU) zumindest zwei Verbindungen (V1, V2) für eine Datenübertragung mit unterschiedlichen Übertragungsgeschwindigkeiten verwendet werden.

12. System zur Durchführung eines Verfahrens nach einem der Ansprüche 1 bis 11, **dadurch gekennzeichnet, dass** für jede Region zumindest ein Messgerät (MG11, MG21) und für jeden Stromführungszweig (S1, S2) zumindest drei Messstellen (M11, ..., M23) vorgesehen sind, dass weiterhin ein zentrales Überwachungssystem (ZU) vorgesehen ist, welches zumindest aus einer Datenbündelungseinrichtung (DC), einer Überwachungs- und Steuereinrichtung (ST) und einer Einheit zum Abschätzen von Netzzuständen (SE) besteht, in welcher die von dem zumindest einen Messgerät (MG11, MG21) je Region und den zumindest drei Messstellen (M11, ..., M23) je Stromführungszweig (S1, S2) gemessenen Kennwerte unter Verwendung von statischen Teilnehmerparametern (TP) und statischen elektrischen Parametern (PA) verarbeitbar sind.

13. System nach Anspruch 12, **dadurch gekennzeichnet, dass** das zentrale Überwachungssystem (ZU) weiterhin eine Einheit (LIC) zum Berechnen der statischen elektrischen Parameter (PA), insbesondere von Leitungsimpedanzen für Subsysteme des Niederspannungsnetzes aufweist.

14. System nach einem der Ansprüche 12 bis 13, **dadurch gekennzeichnet, dass** als Kommunikationsmedium für eine Übertragung der gemessenen Kennwerte durch die Messgeräte (MG11, MG21) bei den Teilnehmern (T11, ..., T25) sowie durch die Messstellen (M11, ..., M23) in den Stromführungszweigen (S1, S2) zum zentralen Überwachungssystem (ZU) eine so genannte Powerline Communication einsetzbar ist, und dass innerhalb des zentralen Überwachungssystems (ZU) zumindest zwei Verbindungen (V1, V2) mit unterschiedlichen Übertragungsgeschwindigkeiten für eine Übertragung von Daten vorgesehen sind.
